# EUROPÄISCHE PATENTSCHRIFT

(11) **EP 0 655 416 B1**
(45) Veröffentlichungstag und Bekanntmachung des Hinweises auf die Patenterteilung: **13.01.1999**
(21) Anmeldenummer: 94117820.4
(22) Anmeldetag: 11.11.1994
(51) Int. Cl.: C02F 1/02

(54) **Verfahren und Vorrichtung zum Abbau von harten Komplexbildnern in wässriger Lösung**
Process and device for degrading persistent sequestering agents in aqueous solutions
Procédé et dispositif pour la décomposition d'agents séquestrants persistants dans les solutions aqueuses

(30) Priorität: 26.11.1993 DE 4340356
(43) Veröffentlichungstag der Anmeldung: 31.05.1995
(73) Patentinhaber: Wieland Edelmetalle GmbH & Co., 75179 Pforzheim (DE)
(72) Erfinder: Gutekunst, Gerhard, Dr., D-76228 Karlsruhe (DE); Mzyk, Waldemar, D-75365 Calw (DE)
(74) Vertreter: Rau, Manfred, Dr. Dipl.-Ing.

(56) Entgegenhaltungen:
- EP-A- 0 080 867
- US-A- 5 256 313
- NUCLEAR AND CHEMICAL WASTE MANAGEMENT, Bd. 7, no.2, 1987 ELMSFORT NY) USA, Seiten 89-93, J.S. BOLES ET AL. 'Reducing the potential '

## Beschreibung

Die Erfindung richtet sich auf ein Verfahren zur Behandlung einer wäßrigen Lösung enthaltend Cyanid-Verbindungen, Schwermetalle, insbesondere Edelmetalle, und stabile Komplexe wie EDTA-, NTA-, DTPA- und NTMP-Komplexe und deren Komplexbildner durch alkalische Hochtemperaturhydrolyse unter Entwicklung von Ammoniumformiat.

Derartige Komplexe kommen zusammen mit Cyanid-Verbindungen in Abwässern vor, wie sie beispielsweise bei Scheideanstalten auftreten. Dementsprechend muß in vielen Anwendungsfällen der Abbau derartiger harter Komplexbildner einhergehen mit einer Cyanid-Entgiftung bzw. sollte möglichst gleichzeitig erfolgen können. Weiterhin kommt es darauf an, aus derartigen cyanidischen Abwässern Edelmetalle zurückzugewinnen, z.B. Gold aus Goldbädern.

Zur Entgiftung cyanidhalter Abwässer sind verschiedene Technologien bekannt. Beispielsweise werden sie häufig mit Natriumhypochlorid behandelt, wobei durch Nebenreaktionen allerdings umweltschädliche Verbindungen wie AOX entstehen, so daß derartige Verfahren nicht mehr genehmigt werden.

Bei weiterhin bekannten derartigen Verfahren unter Verwendung von Wasserstoffperoxid gelingt es nicht, strenge Grenzwerte einzuhalten. Diese Verfahren besitzen überdies den besonderen Nachteil, daß die komplexen Metallcyanide neben dem freien Cyanid nicht hinreichend abgebaut werden. Durch die Oxidation des Cyanids werden Metallionen freigesetzt, die eine katalytische Zersetzung des Wasserstoffperoxids zur Folge haben.

Aus US-A-5,256,313 ist ein Verfahren und eine Vorrichtung zur Hochtemperaturhydrolyse wässriger Lösungen bekannt.

In der US-A 5,160,637 wird die Behandlung cynidhaltiger Abwässer im Durchflußreaktor bei erhöhter Temperatur beschrieben. Es wird dort generell die Verwendung eines Verfahrens unter Einsatz hoher Temperaturen und hohem Drucks geschildert. Es wird an dieser Stelle auch ein kontinuierlich arbeitendes Verfahren erörtert, um im alkalischen Medium Cyanid zu ungiftigem und abbaubaren Ammoniumformiat zu hydrolisieren. Allerdings beschäftigt sich diese Druckschrift nicht mit dem gleichzeitigen Abbau von harten Komplexbildnern, und tatsächlich würde gemäß dem vorbekannten Verfahren ein solcher Abbau auch nicht erreicht werden.

Die DE 30 11 650 B1 beschäftigt sich unter dem Gesichtspunkt der Rückgewinnung von Gold aus Flüssigkeiten, die eine Gold-Cyanid-Verbindung enthalten, mit einem Verfahren, wobei im alkalischen Medium eine Erhitzung auf Temperaturen um 170° erfolgt. Bei diesem Verfahren, welches in einem herkömmlichen Hochdruckreaktor abläuft, wird unter anderem auch Ammoniak gebildet.

Ausgehend von diesem bekannten Stand der Technik liegt der Erfindung die Aufgabe zugrunde, ein Verfahren und eine Vorrichtung der eingangs genannten Art so auszugestalten, daß neben einer Entgiftung von cyanidhaltigen Abwässern und einer Rückgewinnung von Edelmetallen in einem insoweit an sich bekannten alkalischen Hochtemperaturhydrolyseverfahren gleichzeitig auch ein Abbau von harten Komplexbildnern, wie EDTA, unter Verwendung eines mit vertretbarem Kostenaufwand realisierbaren Autoklaven möglich ist.

Zur Lösung dieser Aufgabe ist erfindungsgemäß ein Verfahren vorgesehen, das sich dadurch auszeichnet, daß dem für die Hydrolyse verwendeten Autoklaven ein Regelkreis zugeordnet ist, wobei der Wasserdampf-Partialdruck in dem Autoklaven erfaßt und über ein steuerbares Auslaß-Regelventil derart konstant gehalten wird, daß nach Überschreiten eines der vorgegebenen Reaktionstemperatur entsprechenden Wasserdampf-Partialdruck-Sollwertes zur Druckminderung über das Auslaß-Regelventil Inertgase abgelassen werden.

Vorzugsweise ist vorgesehen, daß in dem Autoklaven mittels einer Heizeinrichtung eine Reaktionstemperatur von mindestens 240°C eingestellt wird. Die Heizenergiezufuhr kann zur Konstanthaltung dieser Temperatur selbsttätig geregelt werden.

Die dem Autoklaven zugeführte, zu behandelnde wäßrige Lösung kann Raumtemperatur aufweisen, so daß eine Vorheizung nicht erforderlich ist.

Günstigerweise werden die abgeschiedenen Sedimente als Niederschlag vom Boden des Autoklaven entnommen.

Die gasförmigen Autoklaven-Restprodukte können vorteilhafterweise einem Ammoniumrückgewinnungsverfahren unterzogen werden. Hierzu ist dem Autoklaven vorteilhafterweise eine Ammoniumrückgewinnungsvorrichtung nachgeordnet.

Zur Lösung der eingangs genannten Aufgabe dient auch eine Vorrichtung, die sich auszeichnet durch einen Autoklaven, in dem ein zur Aufnahme von Wasser geeigneter Behälter angeordnet ist, bzw. der mit einem solchen Behälter derart in Verbindung steht, daß der Autoklaven und der Behälter im Verfahren temperaturgleich sind, wobei in dem Behälter eine Meßsonde zur Erfassung des Wasserdampf-Partialdruckes bei der Reaktionstemperatur angeordnet ist.

Durch eine derartige Vorrichtung wird die Aufgabe gelöst, einen Autoklaven so auszubilden, daß die Verfahrenssteuerung verbessert wird.

Durch das erfindungsgemäße Verfahren und die erfindungsgemäße Vorrichtung ist die Verwendung eines Autoklaven möglich, der aus Edelstahl in herkömmlicher Technik zur Verfügung steht, da der von den organischen Komponenten der zu behandelnden wäßrigen Lösungen herrührende Partialdruck aufgrund der erfindungsmäßen Regelung kompensiert wird und bei dem optimalen Wasserdampf-Partialdruck gearbeitet werden kann. Hierdurch ist es möglich, daß auch sehr stabile Komplexe, wie z.B. EDTA, NTA, DTPA und NTMP aufgebrochen werden.

Daneben wird auch noch eine Cyanid-Entgiftung erreicht, wobei die Cyanide in an sich bekannter Weise zum Ammoniumformiat hydrolisiert werden. Die vorhandenen Cyanokomplexe der Schwermetalle werden ausnahmslos entgiftet.

Im übrigen wird gleichzeitig eine Edel- und Schwermetallabscheidung erreicht, wobei diese Metalle als metallischer Niederschlag ausfallen. Dieser Niederschlag ist gut absetzbar und filtrierbar und kann dementsprechend leicht abgetrennt werden. Das Roh-Edelmetall kann mit Salpetersäure von unedlen Metallen befreit werden und - beispielsweise - das zu über 95% gereinigte Gold der Raffination zugeführt werden. Das verbleibende Abwasser ist bis auf marginale Spuren von Kupfer und Nickel völlig unproblematisch und kann einer Sonderbehandlung zugeführt werden.

Dementsprechend macht das erfindungsgemäße Verfahren auch ein spezielles Verfahren zur Rückgewinnung der Edelmetalle entbehrlich, wofür herkömmlicherweise elektrochemische Methoden oder chemische Methoden, vor allem aber chemisch-physikalische Verfahren, wie Ionenaustausch, verwendet werden. Das Ionenaustauschverfahren ist zwar sehr wirksam, wobei z.B. das in der wässrigen Lösung enthaltene Gold auf Ionenaustauschern sorbiert wird und diese anschließend verascht und das geschmolzene Gold der Raffination oder der Vorscheidung zugeführt wird. Allerdings entstehen bei diesem Ionenaustauschverfahren relativ hohe Kosten, die erfindungsgemäß weitgehend vermieden werden können.

Vorteilhafterweise ist vorgesehen, daß dem steuerbaren Auslaß-Regelventil ein Wärmetauscher vorgeordnet ist, der mit dem Autoklaven in Druckverbindung steht bzw. in dem Autoklaven angeordnet ist. Hierdurch wird erreicht, daß durch den Wärmetauscher kondensierbare gasförmige Komponenten abgeschieden werden und die Druckregelung über das Auslaß-Regelventil über die vergleichsweise inerten Gase erfolgt.

Zusammenfassend läßt sich also feststellen, daß das erfindungsgemäße Verfahren und die entsprechende Vorrichtung eine Summe von Vorteilen bieten, indem Aufarbeitung und Entgiftung der wässrigen Lösung, z.B. in Form von Abwasser, in einem Arbeitsschritt erfolgen, keine Chemikalien eingesetzt werden müssen, die im Abwasser enthaltenen Edelmetalle praktisch zu 100% rückgewonnen werden können und eine Cyanidentgiftung weit unter die vorgeschriebenen Grenzwerte möglich ist. Darüber hinaus entstehen bei diesem Verfahren keine schädlichen Nebenprodukte wie AOX, Salzfracht, Sulfat oder dergleichen wie bei anderen naßchemischen Verfahren. Es wird eine sehr kurze Verweilzeit erreicht, die bei ca. 6 Stunden liegt im Vergleich zu einem Zeitrahmen von 3 Tagen bei herkömmlicher Aufarbeitung und Entsorgung. Weiterhin kommt hinzu, daß die Entsorgungs-und Aufarbeitungskosten sehr niedrig sind und eine vollautomatische Verfahrensführung bei schnellem Edelmetallumlauf möglich ist, was sich ebenfalls kostenoptimal auswirkt.

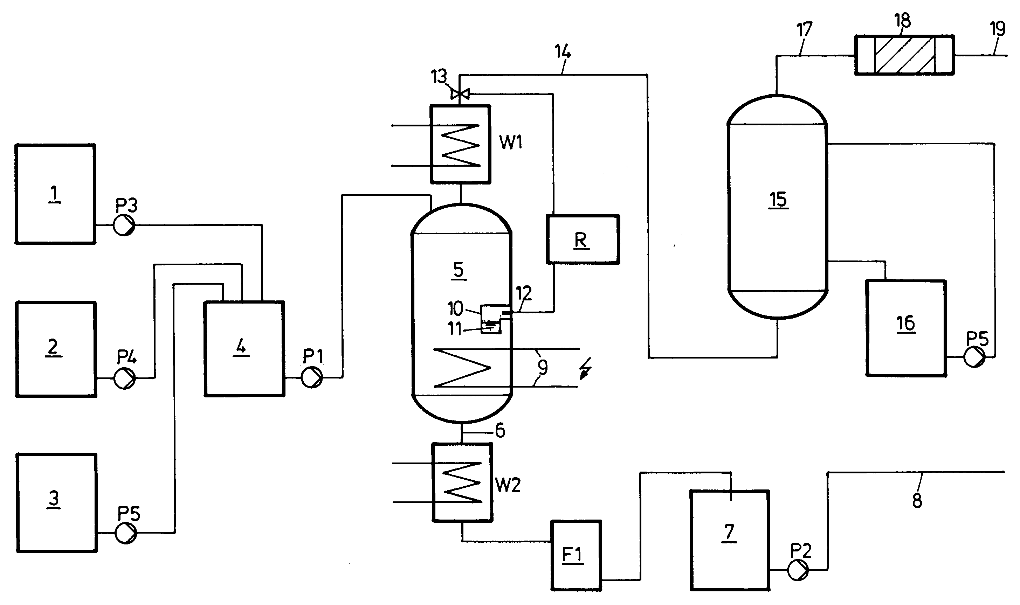

Nachfolgend wird die Erfindung anhand eines bevorzugten Ausführungsbeispiels in Verbindung mit der Zeichnung näher beschrieben. Diese zeigt eine blockschaltbildartige Darstellung einer erfindungsgemäßen Vorrichtung.

Eine erfindungsgemäße Vorrichtung umfaßt einen Speicherbehälter 1 für Goldbäder, einen Speicherbehälter 2 für Silberbäder und einen Speicher 3 für Entsorgungen.

Jedem Speicher 1 bzw. 2 bzw. 3 ist eine Pumpe P3 bzw. P4 bzw. P5 nachgeordnet, um den Speicherinhalt in einen Vorlagespeicher 4 für die nachfolgende Hydrolyse zu pumpen. Eine diesem Speicher 4 nachgeordnete Pumpe P1 pumpt den Speicherinhalt in einen Autoklaven 5 aus Edelstahl von herkömmlicher Bauart.

An der Unterseite des Autoklaven 5 ist eine Entnahmeleitung 6 für die flüssigen und festen Reaktionsprodukte vorgesehen, in welcher ein Wärmetauscher W2 zur Rückgewinnung der Wärmeenergie angeordnet ist. Dem Wärmetauscher W2 ist eine Filtereinrichtung F1 nachgeordnet, die zur Abscheidung der Edelmetallkomponenten für deren nachfolgende Rückgewinnung dient. Es schließt sich ein Speicher 7 an, um die flüssigen Rückstände bei Bedarf über eine nachgeordnete Pumpe P2 und die Leitung 8 einer Sonderbehandlung zuzuführen.

In der unteren Hälfte des Autoklaven 5 sind elektrische Heizwicklungen 9 vorgesehen, um über eine gegebenenfalls geregelte Zufuhr elektrischer Energie die gewünschte Reaktionstemperatur einstellen zu können.

In den Autoklaven 5 ragt weiterhin ein Behälter 10 mit schematisch angedeutetem Wasser 11 hinein, so daß sich der Behälter 10 mit dem darin befindlichen Wasser 11 auf Reaktionstemperatur befindet und über eine Drucksonde 12 der Wasserdampf-Partialdruck bei dieser Temperatur erfaßt und einer Regeleinrichtung R zugeführt werden kann, durch die in Abhängigkeit von einem Soll-Ist-Wertvergleich ein Auslaßregelventil 13 angesteuert wird, um durch entsprechendes Öffnen und Schließen dieses Ventils 13 einen optimalen Reaktionsdruck einzustellen. Dem Auslaßventil 13 ist ein Wärmetauscher W1 vorgeordnet, um die Wärmeenergie der gasförmigen Reaktionsprodukte zurückzugewinnen. Die Auslaßleitung 14 führt zu einer Ammoniumrückgewinnungsanlage 15 herkömmlicher Bauart, der ein Speicher 16 für Ammoniumchlorid und eine Pumpe P5 zum Umpumpen und Rückpumpen desselben in die Ammoniumrückgewinnungsanlage 15 nachgeordnet ist. Eine Auslaßleitung 17 für gasförmige Reaktionsprodukte führt über einen Verbrennungskatalysator 18 zum Auslaß 19.

Mittels chemischer Analysen konnte nachgewiesen werden, daß insbesondere hinsichtlich harter organischer Komplexbildner bei einer Verfahrenstemperatur von 240°C folgende Abbauverhältnisse erzielt werden können:

| | **Zeit (h)** | **Konz. (g/l)** | **Abbaurate (%)** |
|---|---|---|---|
| EDTA | 4 | 10 | 96 |
| Cu-EDTA | 1 | 10 | 98,5 |
| NTA | 4 | 10 | 78 |
| DTPA | 2 | 10 | 98 |
| NTMP | 4 | 10 | 99 |

Bemerkenswert ist insbesondere auch, daß bei den durchgeführten Versuchen für AOX eine Abbaurate von 98% erzielt werden konnte.

## Patentansprüche

1. Verfahren zur Behandlung einer wäßrigen Lösung enthaltend Cyanid-Verbindungen, Schwermetalle, insbesondere Edelmetalle, und stabile Komplexe wie EDTA-, NTA-, DTPA- und NTMP-Komplexe und deren Komplexbildner durch alkalische Hochtemperaturhydrolyse unter Entwicklung von Ammoniumformiat, **dadurch gekennzeichnet, daß** dem für die Hydrolyse verwendeten Autoklaven (5) ein Regelkreis (R) zugeordnet ist, wobei der Wasserdampfpartialdruck in dem Autoklaven (5) erfaßt und über ein steuerbares Auslaß-Regelventil (13) derart konstant gehalten wird, daß nach Überschreiten eines der vorgegebenen Reaktionstemperatur entsprechenden Wasserdampf-Partialdruck-Sollwertes zur Druckminderung über das Auslaß-Regelventil (13) Intertgase abgelassen werden.

2. Verfahren nach Anspruch 1, dadurch gekennzeichnet, daß in dem Autoklaven (5) mittels einer Heizeinrichtung (9) eine Reaktions-Temperatur von ca. 240°C eingestellt wird.

3. Verfahren nach Anspruch 1, dadurch gekennzeichnet, daß die dem Autoklaven (5) zugeführte, zu behandelnde wässrige Lösung Raumtemperatur aufweist.

4. Verfahren nach Anspruch 1, dadurch gekennzeichnet, daß die abgeschiedenen Sedimente als Niederschlag vom Boden des Autoklaven (5) entnommen werden.

5. Verfahren nach Anspruch 1, dadurch gekennzeichnet, daß die gasförmigen Autoklaven-Restprodukte einem Ammoniumrückgewinnungsverfahren unterzogen werden.

6. Verfahren nach Anspruch 1, dadurch gekennzeichnet, daß die Hydrolyse bei einem Druck von ca. 40 bar erfolgt.

7. Vorrichtung zur Durchführung des Verfahrens nach den Ansprüchen 1 bis 6, **gekennzeichnet durch** einen Autoklaven (5), in dem ein zur Aufnahme von Wasser geeigneter Behälter (11) angeordnet ist, bzw. der mit einem solchen Behälter (11) derart in Verbindung steht, daß der Autoklaven (5) und der Behälter (11) im Verfahren temperaturgleich sind, wobei in dem Behälter (11) eine Meßsonde (12) zur Erfassung des Wasserdampf-Partialdruckes bei der Reaktionstemperatur angeordnet ist.

8. Vorrichtung nach Anspruch 7, dadurch gekennzeichnet, daß dem steuerbaren Auslaß-Regelventil (13) ein Wärmetauscher (W1) vorgeordnet ist, der mit dem Autoklaven (5) in Druckverbindung steht bzw. in dem Autoklaven (5) angeordnet ist.

9. Vorrichtung nach Anspruch 8, dadurch gekennzeichnet, daß dem Autoklaven (5) eine Ammoniumrückgewinnungseinrichtung (15) nachgeordnet ist.

## Claims

1. Process of treating an aqueous solution containing cyanide compounds, heavy metals, in particular precious metals, and stable complexes such as EDTA, NTA, DTPA and NTMP complexes and their sequestering agents by alkaline high-temperature hydrolysis with ammonium formate developing, characterized in that a control loop (R) is allocated to the autoclave (5) used for the hydrolysis, the partial water vapor pressure in the autoclave (5) being detected and kept constant by way of a controllable discharge regulating valve (13), in that after a desired value, corresponding to the given reaction temperature, of the partial water vapor pressure is exceeded, inert gases are blown off via the discharge regulating valve (13) for pressure reduction.

2. Process according to claim 1, characterized in that a reaction temperature of approximately 240°C is set in the autoclave (5) by means of a heating installation (9).

3. Process according to claim 1, characterized in that the to-be-treated aqueous solution supplied to the autoclave (5) has ambient temperature.

4. Process according to claim 1, characterized in that the precipitated sediments are removed as a deposit from the bottom of the autoclave (5).

5. Process according to claim 1, characterized in that the gaseous residual products of the autoclave are subject to an ammonium recovery process.

6. Process according to claim 1, characterized in that hydrolysis takes place at a pressure of approximately 40 bar.

7. Apparatus for putting into practice the process according to claims 1 to 6, characterized by an autoclave (5), in which a tank (11) suitable for the take-up of water is disposed or which is in connection with such a tank (11), respectively, in such a way that the autoclave (5) and the tank (11) are of a uniform temperature in the process, a sensing probe (12) for the detection of the partial water vapor pressure at the reaction temperature being disposed in the tank (11).

8. Apparatus according to claim 7, characterized in that the controllable discharge regulating valve (13) is topped by a heat exchanger (W1) which is in pressure connection with the autoclave (5) or is disposed in the autoclave (5), respectively.

9. Apparatus according to claim 8, characterized in that an ammonium recovery device (15) is disposed downstream of the autoclave (5).

## Revendications

1. Procédé destiné au traitement par hydrolyse alcaline à haute température avec génération de formiate d'ammonium d'une solution aqueuse contenant des composés de cyanure, des métaux lourds, notamment des métaux précieux, et des complexes stables tels que du EDTA, du NTA, du DTPA, et du NTMP et leurs complexants, caractérisé en ce qu'un circuit de régulation (R) est associé à l'autoclave (5) utilisé pour l'hydrolyse, la pression partielle de la vapeur d'eau régnant dans l'autoclave (5) étant détectée et maintenue constante par l'intermédiaire d'une vanne de régulation de sortie (13) pouvant être commandée, de telle sorte qu'après le dépassement d'une valeur de consigne de la pression partielle de la vapeur d'eau correspondant à la température de réaction prescrite, des gaz inertes sont évacués par l'intermédiaire de la vanne de régulation de sortie (13) pour réduire la pression.

2. Procédé selon la revendication 1, caractérisé en ce qu'une température de réaction de l'ordre de 240 °C est réglée dans l'autoclave (5) au moyen d'un dispositif de chauffage (5).

3. Procédé selon la revendication 1, caractérisé en ce que la solution aqueuse à traiter amenée à l'autoclave (5) est à température ambiante.

4. Procédé selon la revendication 1, caractérisé en ce que les sédiments séparés sont prélevés du fond de l'autoclave (5) en tant que précipité.

5. Procédé selon la revendication 1, caractérisé en ce que les résidus gazeux de l'autoclave sont soumis à un procédé de récupération d'ammonium.

6. Procédé selon la revendication 1, caractérisé en ce que l'hydrolyse est effectuée à une pression de l'ordre de 40 bars.

7. Dispositif destiné à la mise en oeuvre du procédé selon l'une quelconque des revendications 1 à 6, caractérisé par un autoclave (5) dans lequel est disposé un réservoir (11) approprié pour recevoir de l'eau, ou qui est relié à un tel réservoir (11), de telle sorte que l'autoclave (5) et le réservoir (11) soient à la même température en cours de procédé, une sonde de mesure (12) étant disposée dans le réservoir (11) pour détecter la pression partielle de la vapeur d'eau à la température de réaction.

8. Dispositif selon la revendication 7, caractérisé en ce qu'un échangeur de chaleur (W1) est disposé en amont de la vanne de régulation de sortie (13) pouvant être commandée, lequel est en liaison de pression avec l'autoclave (5) ou est disposé dans l'autoclave (5).

9. Dispositif selon la revendication 8, caractérisé en ce qu'une unité (15) de récupération d'ammonium est disposée en aval de l'autoclave (5).
